# EUROPEAN PATENT APPLICATION

(11) **EP 4 765 229 A1**
(43) Date of publication of application: **24.06.2026**
(21) Application number: 25857536.4
(22) Date of filing: 30.07.2025
(51) Int. Cl.: H01M 4/131, H01M 10/0562, H01M 10/0585, H01M 10/052, H01M 4/36, H01M 4/525, H01M 4/02

(54) **CATHODE FOR ALL-SOLID-STATE BATTERY AND ALL-SOLID-STATE BATTERY COMPRISING SAME**

(30) Priority: 22.08.2024 KR 20240112477; 29.07.2025 KR 20250102845
(71) Applicant: LG Energy Solution, Ltd., Seoul 07335 (KR)
(72) Inventor: OH, Kyungbae, Daejeon 34122 (KR); KWON, Hyejin, Daejeon 34122 (KR); LEE, Choonghyeon, Daejeon 34122 (KR); KIM, Myeongsoo, Daejeon 34122 (KR); CHOI, Seokin, Daejeon 34122 (KR); PARK, Mihui, Daejeon 34122 (KR); KANG, Sora, Daejeon 34122 (KR); LEE, Junho, Daejeon 34122 (KR)
(74) Representative: Goddar, Heinz J.
(86) International application number: PCT/KR2025/095470
(87) International publication number: WO 2026/043349

(57) **Abstract**

The present disclosure relates to a positive electrode for an all-solid-state battery and an all-solid-state battery including the same. More specifically, by using two types of positive electrode active materials having different nickel contents and particle sizes (D50) as positive electrode active materials, the porosity of the positive electrode is reduced, and the life deterioration phenomenon due to shrinkage and expansion of the positive electrode material included in the positive electrode is improved, thereby exhibiting an effect of improving the energy density and life characteristics of the all-solid-state battery.

## Description

### TECHNICAL FIELD

### Cross-reference to Related Applications

The present application claims the benefit of priority based on Korean Patent Application No. 10-2024-0112477 filed on August 22, 2024 and Korean Patent Application No. 10-2025-0102845 filed on July 29, 2025, and all contents disclosed in the documents of the Korean patent applications are incorporated as part of this specification.

### Technical Field

The present disclosure relates to a positive electrode for an all-solid-state battery and an all-solid-state battery including the same.

### BACKGROUND ART

Various batteries that can overcome the limitations of current lithium secondary batteries are being researched in terms of capacity, safety, output, large-scale, and ultra-miniaturization of batteries.

Representative examples include metal-air batteries that have very large theoretical capacity compared to lithium secondary batteries in terms of capacity, all-solid-state batteries that have no risk of explosion in terms of safety, supercapacitors in terms of output, NaS batteries or redox flow batteries (RFB) in terms of large-scale, and thin film batteries in terms of ultra-miniaturization, which are being continuously researched in academia and industry.

Among various next-generation batteries, an all-solid-state battery refers to a battery in which the liquid electrolyte used in conventional lithium secondary batteries is replaced with a solid electrolyte, and since no flammable solvent is used in the battery, no ignition or explosion occurs due to decomposition reactions of conventional electrolytes, thereby significantly improving safety. Also, among all-solid-state batteries, technological development continues for sulfide-based all-solid-state batteries that have high ionic conductivity of solid electrolytes and can theoretically realize high energy density of 900 Wh/L or more. At this time, a sulfide-based all-solid-state battery refers to an all-solid-state battery including a sulfide-based solid electrolyte.

In the all-solid-state battery system, lithium ion conduction by the liquid electrolyte included in conventional lithium-ion batteries (LIB) does not occur. Therefore, when manufacturing a positive electrode for a sulfide-based all-solid-state battery, sulfide-based solid electrolyte particles of small particle size must be added inside the positive electrode to increase the contact interface between the positive electrode active material and the sulfide-based solid electrolyte particles to increase lithium ion conduction. Also, to improve energy density, physical contact between the positive electrode active material, sulfide-based solid electrolyte particles, and other battery elements in the positive electrode must be enhanced, and the porosity after rolling of the positive electrode must be reduced, which must be maintained during charging and discharging.

Accordingly, the need for technology development that can improve the performance of all-solid-state batteries by further reducing porosity in the positive electrode of sulfide-based all-solid-state batteries has been consistently raised.

### [Prior Art Documents]

(Patent Document 1) Korean Laid-Open Publication No. 2023-0138774

### SUMMARY OF THE INVENTION

### TECHNICAL PROBLEM

The present inventors, as a result of conducting multifaceted research to solve the above problems, confirmed that a positive electrode including two types of positive electrode active materials having different nickel contents and particle sizes (D50) can reduce porosity and improve the energy density of all-solid-state batteries.

Therefore, an objective of the present disclosure is to provide a positive electrode for an all-solid-state battery with reduced porosity.

Another objective of the present disclosure is to provide an all-solid-state battery including the positive electrode for an all-solid-state battery with reduced porosity.

### TECHNICAL SOLUTION

To achieve the above objective, the present disclosure provides a positive electrode for an all-solid-state battery comprising a positive electrode current collector and a positive electrode active material layer formed on one surface of the positive electrode current collector,
wherein the positive electrode active material layer comprises a positive electrode active material, a solid electrolyte, a binder, and a conductive material,
the positive electrode active material comprises a first positive electrode active material and a second positive electrode active material,
a nickel content of the first positive electrode active material is greater than a nickel content of the second positive electrode active material,
and a particle size (D50) of the first positive electrode active material is smaller than a particle size (D50) of the second positive electrode active material.

In one embodiment of the present disclosure, a molar fraction of nickel in the positive electrode active material is 0.6 to 0.99, and the molar fraction of nickel is a number of moles of nickel relative to a total number of moles of all metals excluding lithium among metals comprised in the positive electrode active material.

In one embodiment of the present disclosure, the metals excluding lithium comprise nickel, cobalt, and manganese.

In one embodiment of the present disclosure, a weight ratio of the first positive electrode active material and the second positive electrode active material is 1:1 to 5:1.

In one embodiment of the present disclosure, a particle size (D50) of the positive electrode active material is 2 µm to 10 µm.

In one embodiment of the present disclosure, the positive electrode active material has a layered structure.

In one embodiment of the present disclosure, the positive electrode active material is comprised in an amount of 70 wt% to 95 wt% based on a total weight of the positive electrode active material layer.

In one embodiment of the present disclosure, the solid electrolyte includes at least one selected from the group consisting of a sulfide-based solid electrolyte and a chloride-based solid electrolyte.

In one embodiment of the present disclosure, a particle size (D50) of the solid electrolyte is 2 µm or less.

In one embodiment of the present disclosure, a porosity of the positive electrode active material layer is 5 vol% to 16 vol%.

The present disclosure also provides an all-solid-state battery comprising the positive electrode, a negative electrode, and a sulfide-based solid electrolyte membrane interposed therebetween.

### EFFECTS OF THE INVENTION

According to the present disclosure, a positive electrode including two types of positive electrode active materials having different nickel contents and particle sizes (D50) has reduced porosity and improved life deterioration phenomenon due to shrinkage and expansion, thereby exhibiting an effect of improving energy density and life characteristics of an all-solid-state battery.

### BRIEF DESCRIPTION OF THE DRAWINGS

FIG. 1 is a graph showing changes in energy density of positive electrodes manufactured in Example 1 and Comparative Examples 1 to 6.
FIG. 2 is a graph showing changes in 200-cycle capacity retention rate of all-solid-state batteries manufactured in Example 1 and Comparative Examples 1 to 6.

### BEST MODE FOR CARRYING OUT THE INVENTION

Hereinafter, the present disclosure will be described in more detail to help understanding of the present disclosure.

The terms or words used in this specification and claims should not be interpreted as limited to their conventional or dictionary meanings, and should be interpreted as meanings and concepts consistent with the technical idea of the present disclosure based on the principle that an inventor can appropriately define the concept of terms to explain his or her invention in the best way.

### Positive electrode for All-Solid-State Battery

The present disclosure relates to a positive electrode for an all-solid-state battery.

The positive electrode for an all-solid-state battery according to the present disclosure includes a positive electrode current collector and a positive electrode active material layer formed on one surface of the positive electrode current collector, the positive electrode active material layer includes a positive electrode active material, a solid electrolyte, a binder, and a conductive material, and the positive electrode active material includes two types of positive electrode active materials having different nickel contents and particle sizes (D50). The nickel content may mean a molar fraction of nickel. The molar fraction of nickel may mean a ratio of moles of nickel to a total number of moles of metals excluding lithium among metal elements included in the positive electrode active material.

In one embodiment of the present disclosure, the positive electrode active material includes two types of positive electrode active materials having different nickel contents and particle sizes (D50). To distinguish the two types of positive electrode active materials, they are referred to as a first positive electrode active material and a second positive electrode active material.

Since the first and second positive electrode active materials have different particle sizes (D50), porosity in the positive electrode active material layer can be reduced. For example, among the first and second positive electrode active materials, a positive electrode active material having a relatively small particle size (D50) can fill small pores to reduce porosity.

Specifically, a nickel content of the first positive electrode active material may be greater than a nickel content of the second positive electrode active material, and a particle size (D50) of the first positive electrode active material may be smaller than a particle size (D50) of the second positive electrode active material.

In one embodiment of the present disclosure, a molar fraction of nickel in the positive electrode active material may be 0.6 to 0.99, and the molar fraction of nickel may be a number of moles of nickel relative to a total number of moles of all metals excluding lithium among metals included in the positive electrode active material. The metals excluding lithium may include nickel, cobalt, and manganese, and the molar fraction of nickel may mean a number of moles of nickel relative to a total number of moles of the nickel, cobalt, and manganese. When the molar fraction is expressed as a percentage, the unit of the molar fraction may be mol%.

Within the range of the molar fraction of nickel, the molar fraction of nickel of the first positive electrode active material may be greater than the molar fraction of nickel of the second positive electrode active material. Specifically, the molar fraction of nickel may be 0.6 or more, 0.65 or more, 0.7 or more, 0.75 or more, or 0.8 or more, and may be 0.99 or less, 0.98 or less, 0.97 or less, 0.96 or less, 0.95 or less, 0.94 or less, 0.93 or less, 0.92 or less, 0.91 or less, 0.90 or less, 0.89 or less, 0.88 or less, 0.87 or less, 0.86 or less, or 0.85 or less.

Specifically, the first and second positive electrode active materials may be lithium nickel-based oxides. The nickel content may mean a molar fraction of nickel among metal elements excluding lithium in the lithium nickel-based oxide. Even if metal elements are doped in the lithium nickel-based oxide, an amount of the doped metal elements is negligibly small. Therefore, the nickel content in the lithium nickel-based oxide can be defined as a molar fraction of nickel among metal elements excluding lithium. Specifically, the nickel content may mean a molar fraction of nickel among metal elements excluding lithium and doped metal elements.

The lithium nickel-based oxide may be represented by the following Chemical Formula 1:

<Chemical Formula 1> Liₓ[NiₐCo_{b}Mn_{c}M¹_{d}]O₂

In Chemical Formula 1, M¹ is at least one selected from the group consisting of Zr, W, Y, Ba, Ca, Ti, Mg, Ta, Nb, Si, Al, and B, and 0.8 ≤ x ≤ 1.2, 0.6 ≤ a ≤ 0.99, 0 < b < 0.5, 0 < c < 0.5, 0 ≤ d ≤ 0.2.

The x represents a molar ratio of lithium in the lithium nickel-based oxide, and may be 0.8≤x≤1.2, 0.9≤x≤1.1, or 1≤x≤1.1.

The a represents a molar ratio of nickel among metals excluding lithium in the lithium nickel-based oxide, and may be 0.6≤a≤0.99, 0.6≤a≤0.95, 0.6≤a≤0.9, 0.65≤a≤0.9, 0.65≤a≤0.85, or 0.65≤a≤0.80.

The b represents a molar ratio of cobalt among metals excluding lithium in the lithium nickel-based oxide, and may be 0<b<0.5, 0.01≤b≤0.4, 0.01≤b≤0.3, or 0.05≤b≤0.2.

The c represents a molar ratio of manganese among metals excluding lithium in the lithium nickel-based oxide, and may be 0<c<0.5, 0.01≤c≤0.4, 0.05≤c≤0.4, or 0.1≤c≤0.4.

The d represents a molar ratio of M¹ element among metals excluding lithium in the lithium nickel-based oxide, and may be 0≤d≤0.2 or 0≤d≤0.1.

The M¹ is an element to be doped, and is not particularly limited as long as it is a metal element that can be doped into the lithium nickel-based oxide. Preferably, the M¹ may be at least one selected from the group consisting of Zr, W, Y, Ba, Ca, Ti, Mg, Ta, Nb, Si, Al, and B.

Also, the positive electrode active material may have a layered structure. For example, when the positive electrode active material is a lithium nickel-based oxide, the layered structure may be a structure in which a lithium layer including lithium and a metal layer including transition metals and metals are alternately and repeatedly arranged. Also, a partially ordered mixed structure in which the lithium and the transition metals or metals are mixed may be provided in the lithium layer or the metal layer of the positive electrode active material. Accordingly, structural stability of the positive electrode active material may be improved under high voltage and high temperature conditions.

In one embodiment of the present disclosure, a nickel content of the first positive electrode active material may be greater than a nickel content of the second positive electrode active material. Also, a particle size (D50) of the first positive electrode active material may be smaller than a particle size (D50) of the second positive electrode active material.

Since the first positive electrode active material has a greater nickel content and smaller particle size (D50) than the second positive electrode active material, small pores in the positive electrode active material layer can be filled to reduce porosity. If the nickel content of the first positive electrode active material is smaller than or equal to that of the second positive electrode active material, capacity may be reduced and energy density may be deteriorated. Also, if the particle size (D50) of the first positive electrode active material is greater than or equal to that of the second positive electrode active material, the effect of reducing porosity of the positive electrode active material layer may be minimal and life characteristics may be deteriorated.

Also, a particle size (D50) of the positive electrode active material may be 2 µm to 10 µm. If the particle size (D50) of the positive electrode active material is less than 2 µm, the particle size is excessively small, resulting in decreased dispersibility, which may cause agglomeration in the positive electrode active material layer, and if it exceeds 10 µm, a movement path of lithium ions from a surface to a center of the positive electrode active material increases, which may deteriorate output characteristics of the all-solid-state battery. Specifically, the particle size (D50) of the positive electrode active material may be 2 µm or more, 2.5 µm or more, or 3 µm or more, and may be 10 µm or less, 9 µm or less, 8 µm or less, 7 µm or less, 6 µm or less, 5 µm or less, or 4 µm or less. Within the specified particle size (D50) range, the particle size (D50) of the first positive electrode active material may be smaller than the particle size (D50) of the second positive electrode active material. The particle size (D50) of the first positive electrode active material may be 2 µm to 4 µm, and specifically, may be 2 µm or more, 2.1 µm or more, 2.2 µm or more, 2.3 µm or more, 2.4 µm or more, or 2.5 µm or more, and may be 4 µm or less, 3.9 µm or less, 3.8 µm or less, 3.7 µm or less, 3.6 µm or less, or 3.5 µm or less. Also, the particle size (D50) of the second positive electrode active material may be more than 4 µm and 10 µm or less, and specifically, may be more than 4 µm, 4.5 µm or more, 5 µm or more, 5.5 µm or more, 6 µm or more, or 6.5 µm or more, and may be 10 µm or less, 9.5 µm or less, 9 µm or less, 8.5 µm or less, 8 µm or less, 7.5 µm or less, or 7 µm or less.

Also, a weight ratio of the first positive electrode active material and the second positive electrode active material may be 1:1 to 5:1. If the weight ratio is less than 1:1, a weight of the first positive electrode active material having a high nickel content is relatively small, which may reduce a discharge capacity of the all-solid-state battery and thus reduce an electrode energy density. Also, if the weight ratio exceeds 5: 1, a weight of the first positive electrode active material having a small particle size is relatively large, which may reduce an electrode density and thus reduce an electrode energy density.

Also, the positive electrode active material may be included in an amount of 70 wt% to 95 wt% based on a total weight of the positive electrode active material layer. If the content of the positive electrode active material is less than 70 wt%, energy density of the battery may be deteriorated, and if it exceeds 95 wt%, mass transfer resistance may increase. Specifically, the content of the positive electrode active material may be 70 wt% or more, 75 wt% or more, or 80 wt% or more, and may be 95 wt% or less, 90 wt% or less, or 85 wt% or less.

In one embodiment of the present disclosure, the solid electrolyte may include at least one selected from the group consisting of a sulfide-based solid electrolyte and a chloride-based solid electrolyte.

The sulfide solid electrolyte may include at least one selected from the group consisting of LiPSX (X = Cl, Br or I), LiGePS, and LiPS. However, the sulfide-based solid electrolyte is not limited thereto, and sulfide-based solid electrolytes commonly used in the art may be widely used.

Also, the chloride-based solid electrolyte may include Li-M-X (M is a metal element selected from the group consisting of Y, Sc, Cr, Mn, Fe, Al, Ga, As, Sb, Bi, Mg, Ca, Zn, Cd, Tb, Dy, Ho, Er, Tm, and Yb, and X is a halogen element which is F, Cl or Br). However, the chloride-based solid electrolyte is not limited thereto, and chloride-based solid electrolytes commonly used in the art may be widely used.

Also, a particle size (D50) of the solid electrolyte may be 2 µm or less. If the particle size (D50) of the solid electrolyte exceeds 2.0 µm, dispersion may be somewhat easy, but a contact surface with the positive electrode active material may decrease and positive electrode porosity may increase. Specifically, the particle size (D50) of the solid electrolyte may be 2 µm or less, 1.9 µm or less, 1.8 µm or less, 1.7 µm or less, 1.6 µm or less, 1.5 µm or less, 1.4 µm or less, 1.3 µm or less, 1.2 µm or less, 1.1 µm or less, 1.0 µm or less, 0.9 µm or less, 0.8 µm or less, 0.7 µm or less, 0.6 µm or less, or 0.5 µm or less. A lower limit of the particle size (D50) of the solid electrolyte is not particularly limited. For example, the lower limit of the particle size (D50) of the solid electrolyte may be more than 0 µm or more than 0.1 µm.

Also, the solid electrolyte may be included in an amount of 10 to 50 wt% based on a total weight of the positive electrode active material layer. Specifically, the content of the solid electrolyte may be 10 wt% or more, 20 wt% or more, or 30 wt% or more, and may be 40 wt% or less, 45 wt% or less, or 50 wt% or less. If the content of the solid electrolyte is less than 10 wt%, it may not be sufficient to fill pores formed in the positive electrode active material layer, making it difficult to reduce porosity of the positive electrode active material, and if it exceeds 50 wt%, contents of the positive electrode active material and the conductive material are relatively reduced, which may deteriorate battery performance.

In one embodiment of the present disclosure, the binder included in the positive electrode active material layer may be included to assist bonding between materials included in the positive electrode active material layer and bonding between the positive electrode active material layer and the positive electrode current collector. Due to the binder, bonding between materials included in the positive electrode active material layer is promoted, which may further reduce positive electrode porosity.

The binder may be a fibrous binder. During positive electrode manufacturing, the binder may undergo fibrillation during a mixing process and be included in a fibrous form in the positive electrode active material layer. Therefore, it is preferable that the binder has physical properties that can be easily deformed.

Also, the binder may include at least one selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may include polytetrafluoroethylene (PTFE).

Also, the binder may be included in an amount of 0.1 to 3 wt% based on a total weight of the positive electrode active material layer. Specifically, the content of the binder may be 0.1 wt% or more, 0.5 wt% or more, or 0.8 wt% or more, and may be 1.5 wt% or less, 2 wt% or less, or 3 wt% or less. If the content of the binder is less than 0.1 wt%, an effect of improving binding force between materials included in the positive electrode active material layer may be minimal, and an electrode sheet may not be properly formed, and if it exceeds 3 wt%, ionic conductivity or electrical conductivity may be deteriorated.

In one embodiment of the present disclosure, the conductive material may form a path capable of conducting electrons to improve electronic conductivity.

The conductive material may be a linear conductive material, and the linear conductive material may be at least one selected from the group consisting of carbon nanotubes (CNT) and carbon nanofibers (CNF). The linear conductive material may improve electronic conductivity due to its morphological characteristics. For example, an aspect ratio (length/diameter) of the linear conductive material may be 2 or more, and specifically, the aspect ratio may be 2 or more, 5 or more, 10 or more, 20 or more, 30 or more, 40 or more, 50 or more, or 100 or more. If the aspect ratio is less than 2, it may be difficult to form an electron conduction path, which may deteriorate electronic conductivity. Also, an upper limit of the aspect ratio is not particularly limited, but considering ease of forming an electron conduction path, it may be 300 or less, 400 or less, 500 or less, 600 or less, or 700 or less.

Also, the conductive material may be included in an amount of 0.01 to 10 wt% based on a total weight of the positive electrode active material layer. Specifically, the content of the conductive material may be 0.01 wt% or more, 0.1 wt% or more, 0.2 wt% or more, or 0.3 wt% or more, and may be 0.7 wt% or less, 0.9 wt% or less, 1 wt% or less, 3 wt% or less, 5 wt% or less, 6 wt% or less, 7 wt% or less, 8 wt% or less, 9 wt% or less, or 10 wt% or less. If the content of the conductive material is less than 0.01 wt%, electronic conductivity of the positive electrode may be deteriorated, and if it exceeds 10 wt%, resistance may increase as side reactions of the solid electrolyte increase, and also, contents of the positive electrode active material and the sulfide-based solid electrolyte are relatively reduced, which may deteriorate battery performance.

In one embodiment of the present disclosure, a porosity of the positive electrode active material layer may be 5 vol% to 16 vol%.

Specifically, the porosity may be 5 vol% or more, 6 vol% or more, 7 vol% or more, 8 vol% or more, 9 vol% or more, 10 vol% or more, 11 vol% or more, or 12 vol% or more, and may be 16 vol% or less, 15.5 vol% or less, 15 vol% or less, 14.5 vol% or less, 14 vol% or less, 13.5 vol% or less, 13 vol% or less, or 12.5 vol% or less. The porosity is an optimized range considering performance such as energy density of the battery, and if the porosity exceeds 16 vol%, energy density of the battery may be deteriorated.

In one embodiment of the present disclosure, the positive electrode current collector supports the positive electrode active material layer and serves to transfer electrons between an external conductor and the positive electrode active material layer.

The positive electrode current collector is not particularly limited as long as it has high electronic conductivity without causing chemical changes to the all-solid-state battery. For example, as the positive electrode current collector, stainless steel, aluminum, nickel, titanium, palladium, fired carbon, stainless steel surface-treated with carbon, nickel, silver, etc. on the surface, aluminum-cadmium alloy, etc. may be used.

The positive electrode current collector may have a fine uneven structure on a surface of the positive electrode current collector to enhance bonding force with the positive electrode active material layer or may employ a three-dimensional porous structure. Accordingly, the positive electrode current collector may include various forms such as films, sheets, foils, meshes, nets, porous bodies, foams, and non-woven bodies.

### Method for Manufacturing Positive electrode for All-Solid-State Battery

The present disclosure also relates to a method for manufacturing a positive electrode for an all-solid-state battery. Specific materials, physical properties, and contents of the positive electrode active material, solid electrolyte, conductive material, and binder used in the method for manufacturing a positive electrode for an all-solid-state battery according to the present disclosure are as described above.

In one embodiment of the present disclosure, in the step (A1), a slurry may be formed by adding a first positive electrode active material, a second positive electrode active material, a solid electrolyte, a conductive material, and a binder to an organic solvent.

The organic solvent can uniformly disperse the first positive electrode active material, the second positive electrode active material, the solid electrolyte, the conductive material, and the binder, and it is preferable to use one that evaporates easily. Specifically, acetonitrile, methanol, ethanol, tetrahydrofuran, water, isopropyl alcohol, etc. may be mentioned.

Also, a concentration of the slurry is not particularly limited as long as a coating process can be performed smoothly. For example, the concentration of the slurry may be 30 to 50 wt% based on solid content.

In one embodiment of the present disclosure, in the step (A2), the slurry formed in the step (A1) may be coated on a positive electrode current collector.

The coating method is not particularly limited as long as it is a method capable of forming a coating layer using a slurry. For example, the coating may be performed by roll coating, gravure coating, doctor blade coating, slot die coating, slurry coating, or extrusion coating.

In one embodiment of the present disclosure, in the step (A3), the coating layer formed in the step (A2) may be dried.

Also, the drying is not particularly limited as long as it is a drying method capable of removing the organic solvent from the coating layer. For example, the drying may be performed at a temperature of 80 to 130°C.

In the method for manufacturing a positive electrode for an all-solid-state battery according to the present disclosure, the dry process includes: (B1) mixing a first positive electrode active material, a second positive electrode active material, a sulfide-based solid electrolyte, a conductive material, and a binder; and (B2) applying the mixed powder obtained in the step (B1) to a calendaring process to form it into a film form.

Hereinafter, the dry process among the methods for manufacturing a positive electrode for an all-solid-state battery will be described in more detail for each step.

In one embodiment of the present disclosure, in the step (B1), a mixed powder may be obtained by mixing a first positive electrode active material, a second positive electrode active material, a solid electrolyte, a conductive material, and a binder.

Alternatively, the mixing may be physical mixing without using a separate solvent, and the binder may be fibrillated by physical mixing. During the physical mixing, the binder may be fibrillated by being physically deformed while being rubbed with particles in the mixed powder due to shear force. To induce such physical deformation well, a binder that is physically very weak and relatively easily fibrillated may be used as the binder, and for example, PTFE having physical properties that allow physical deformation to occur easily may be used as the binder. Also, to facilitate physical deformation, mortar, ball milling, or roll press may be introduced and implemented during mixing.

In one embodiment of the present disclosure, in the step (B2), the mixed powder obtained in the step (B1) may be applied to a calendaring process to be formed into a film form.

Conditions of the calendaring process may be applied by appropriately controlling process conditions capable of forming into a film form. For example, the calendaring process may be performed at a temperature of 20°C to 200°C for 5 to 50 loops. However, the calendaring process conditions such as temperature, pressure, and number of loops may be any of those used in electrode manufacturing processes used in the conventional battery field.

### All-Solid-State Battery

The present disclosure also relates to an all-solid-state battery including the positive electrode.

The all-solid-state battery according to the present disclosure includes the positive electrode, a negative electrode, and a sulfide-based solid electrolyte membrane interposed therebetween. The positive electrode is as described above.

In one embodiment of the present disclosure, the negative electrode includes a negative electrode active material layer, and the negative electrode active material layer may be formed on one surface of a negative electrode current collector.

The negative electrode active material layer may include a negative electrode active material, a conductive material, and a binder. Alternatively, the negative electrode active material layer may be an anodeless layer.

In the negative electrode active material layer, the negative electrode active material may include a material capable of reversibly intercalating or deintercalating lithium (Li⁺), a material capable of reversibly forming a lithium-containing compound by reacting with lithium ions, lithium metal, or a lithium alloy.

The material capable of reversibly intercalating or deintercalating lithium ions (Li⁺) may be, for example, crystalline carbon, amorphous carbon, or a mixture thereof. The material capable of reversibly forming a lithium-containing compound by reacting with lithium ions (Li⁺) may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal or lithium-indium alloy (Li-In), and specifically, may be lithium metal or lithium thin film or lithium-indium alloy thin film or powder form.

The negative electrode active material may be included in an amount of 40 to 80 wt% based on a total weight of the negative electrode active material layer. Specifically, the content of the negative electrode active material may be 40 wt% or more or 50 wt% or more, and may be 70 wt% or less or 80 wt% or less. If the content of the negative electrode active material is less than 40 wt%, connectivity between the wet negative electrode active material layer and the dry negative electrode active material layer may be insufficient, and if it exceeds 80 wt%, mass transfer resistance may increase.

Also, the binder is a component that assists in bonding of the negative electrode active material and the conductive material and bonding to the negative electrode current collector, and may include at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may include polytetrafluoroethylene (PTFE).

Also, the binder may be included in an amount of 0.5 wt% to 4 wt% based on a total weight of the negative electrode active material layer, and specifically, the content of the binder may be 0.5 wt% or more, 1 wt% or more, or 1.5 wt% or more, and may be 3 wt% or less, 3.5 wt% or less, or 4 wt% or less. If the content of the binder is less than 0.5 wt%, adhesion between the negative electrode active material and the negative electrode current collector may be deteriorated, and if it exceeds 4 wt%, adhesion is improved but the content of the negative electrode active material is reduced accordingly, which may lower battery capacity.

Also, the conductive material is not particularly limited as long as it prevents side reactions in an internal environment of the all-solid-state battery and has excellent electrical conductivity without causing chemical changes to the battery, and typically graphite or conductive carbon may be used, for example, graphite such as natural graphite and artificial graphite; carbon black such as carbon black, acetylene black, Ketjen black, Denka black, thermal black, channel black, furnace black, lamp black, and summer black; carbon-based materials having a crystal structure of graphene or graphite; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives may be used alone or in a mixture of two or more types, but is not necessarily limited thereto. Preferably, the conductive material may include vapor-grown carbon fiber (VGCF).

The conductive material may typically be included in an amount of 1 wt% to 5 wt% based on a total weight of the negative electrode active material layer, and specifically, the content of the conductive material may be 1 wt% or more, 1.5 wt% or more, or 2 wt% or more, and may be 4 wt% or less, 4.5 wt% or less, or 5 wt% or less. If the content of the conductive material is too small, less than 1 wt%, it may be difficult to expect an electrical conductivity improvement effect or electrochemical characteristics of the battery may be deteriorated, and if it is too much, exceeding 5 wt%, an amount of the negative electrode active material is relatively small, which may deteriorate capacity and energy density. A method of including the conductive material in the negative electrode is not particularly limited, and conventional methods known in the art such as mixing and coating with the negative electrode active material may be used.

Also, the negative electrode current collector is not particularly limited as long as it has conductivity without causing chemical changes to the battery, and for example, the negative electrode current collector may be copper, stainless steel, aluminum, nickel, titanium, fired carbon, copper or stainless steel surface-treated with carbon, nickel, titanium, silver, etc. on the surface, aluminum-cadmium alloy, etc. Also, like the positive electrode current collector, the negative electrode current collector may be used in various forms such as films, sheets, foils, nets, porous bodies, foams, and non-woven bodies having fine irregularities formed on the surface.

A method for manufacturing the negative electrode is not particularly limited, and may be manufactured by forming a negative electrode active material layer on a negative electrode current collector using a layer or film formation method commonly used in the art. For example, methods such as pressing, coating, and deposition may be used. Also, a case where a metallic lithium thin film is formed on a metal plate by initial charging after assembling a battery without a lithium thin film on the negative electrode current collector is also included in the negative electrode of the present disclosure.

Also, the anodeless layer refers to a negative electrode layer in which lithium metal or lithium alloy that can be a lithium source among the negative electrode active materials does not exist in the negative electrode at the time of initial assembly of the battery, but lithium is deposited in the negative electrode by charging. The battery including the anodeless layer may be referred to as an anodeless battery.

In the anode-free battery, lithium ions released from the positive electrode move to the negative electrode during charging and discharging of the battery to form a negative electrode active material layer. For example, during charging of the battery, lithium ions are deintercalated from the positive electrode active material and then move to the negative electrode side, becoming lithium metal consisting purely of lithium to form a lithium metal layer in layer form on the negative electrode current collector, or may form a lithium metal structure in any form other than layer form. The any form may be, for example, a structure in which lithium metal is agglomerated in particle form.

In one embodiment of the present disclosure, the sulfide-based solid electrolyte included in the sulfide-based solid electrolyte membrane may include at least one selected from the group consisting of LiPSX (X = Cl, Br or I), LiGePS, and LiPS. However, the sulfide-based solid electrolyte is not limited thereto, and sulfide-based solid electrolytes commonly used in the art may be widely used.

### Battery Module

The present disclosure also relates to a battery module including the all-solid-state battery as a unit cell, a battery pack including the battery module, and a device including the battery pack as a power source.

At this time, specific examples of the device include, but are not limited to: power tools that are powered by an electric motor; electric vehicles including Electric Vehicles (EV), Hybrid Electric Vehicles (HEV), and Plug-in Hybrid Electric Vehicles (PHEV); electric two-wheelers including electric bicycles (E-bikes) and electric scooters (E-scooters); electric golf carts; and power storage systems.

Hereinafter, preferred examples are presented to help understanding of the present disclosure, but the following examples are merely illustrative of the present disclosure, and it is apparent to those skilled in the art that various changes and modifications are possible within the scope and technical spirit of the present disclosure, and it is natural that such changes and modifications belong to the appended claims.

In the following Examples and Comparative Examples, positive electrodes and all-solid-state batteries including the same were manufactured according to the physical properties and compositions of positive electrode active materials as described in Table 1 below.

**[Table 1]**

| | | Type of positive electrode active material | Positive electrode active material | | Weight ratio of first and second positive electrode active materials | |
|---|---|---|---|---|---|---|
| | | First positive electrode active material | | Second positive electrode active material | | |
| | | Nickel molar fraction (mol%) | Particle size (D50, *µ*m) | Nickel molar fraction (mol%) | Particle size (D50, *µ*m) | |
| Example 1 | Two types | 90 | 3 | 82 | 6 | 7:3 |
| Comp. Ex. 1 | One type | 90 | 3 | - | - | - |
| Comp. Ex. 2 | One type | 90 | 6 | - | - | - |
| Comp. Ex. 3 | One type | 82 | 3 | - | - | - |
| Comp. Ex. 4 | One type | 82 | 6 | - | - | - |
| Comp. Ex. 5 | Two types | 90 | 6 | 82 | 6 | 7:3 |
| Comp. Ex. 6 | Two types | 90 | 6 | 82 | 3 | 7:3 |

### Example 1: Manufacturing of Positive electrode and All-Solid-State Battery

### 1-1. Manufacturing of Positive electrode

As shown in Table 1 above, two types of positive electrode active materials were used as positive electrode active materials. The two types of positive electrode active materials are referred to as a first positive electrode active material and a second positive electrode active material, respectively. NCM-based lithium composite transition metal oxides were used for both the first positive electrode active material and the second positive electrode active material. The first positive electrode active material was a positive electrode material having a nickel molar fraction of 90 mol% (hereinafter referred to as Ni90 positive electrode material), which was Li₁Ni_{0.9}Co_{0.07}Mn_{0.03}O₂, and the second positive electrode active material was a positive electrode material having a nickel molar fraction of 82 mol% (hereinafter referred to as Ni82 positive electrode material), which was Li₁Ni_{0.82}Co_{0.13}Mn_{0.03}O₂.

In the positive electrode active materials, a nickel content (nickel molar fraction) of the first positive electrode active material was greater than that of the second positive electrode active material, and a particle size (D50) of the first positive electrode active material was smaller than that of the second positive electrode active material.

A positive electrode active material was prepared by mixing the first positive electrode active material and the second positive electrode active material at a weight ratio of 7:3.

A positive electrode was manufactured as follows using the positive electrode active material, Li₆PS₅Cl as a sulfide-based solid electrolyte, CNF which is a linear conductive material as a conductive material, and polytetrafluoroethylene (PTFE) as a binder.

Powder mixing was performed with a weight ratio of positive electrode active material, sulfide-based solid electrolyte, conductive material, and binder of 84:14.5:0.5:1. Specifically, after quantifying the positive electrode active material, sulfide-based solid electrolyte, and conductive material in powder state, they were mixed for 30 minutes using a blade mixer without using a separate solvent in a dry room environment to obtain a mixture. Then, PTFE (Polytetrafluoroethylene) powder as a binder was quantified and additionally mixed to obtain a mixed powder.

The mixed powder was pressed to manufacture a positive electrode active material layer. The positive electrode active material layer was laminated on an Al foil which is a positive electrode current collector to manufacture a positive electrode.

### 1-2. Manufacturing of All-Solid-State Battery

An all-solid-state battery was manufactured by sequentially laminating a negative electrode current collector (copper, Cu), lithium metal, a sulfide-based solid electrolyte membrane composed of Li₆PS₅Cl, and the positive electrode.

### Comparative Example 1

A positive electrode and an all-solid-state battery were manufactured in the same manner as Example 1, except that Ni90 positive electrode material having a particle size (D50) of 3 µm was used as one type of positive electrode active material.

### Comparative Example 2

A positive electrode and an all-solid-state battery were manufactured in the same manner as Example 1, except that Ni90 positive electrode material having a particle size (D50) of 6 µm was used as one type of positive electrode active material.

### Comparative Example 3

A positive electrode and an all-solid-state battery were manufactured in the same manner as Example 1, except that Ni82 positive electrode material having a particle size (D50) of 3 µm was used as one type of positive electrode active material.

### Comparative Example 4

A positive electrode and an all-solid-state battery were manufactured in the same manner as Example 1, except that Ni82 positive electrode material having a particle size (D50) of 6 µm was used as one type of positive electrode active material.

### Comparative Example 5

A positive electrode and an all-solid-state battery were manufactured in the same manner as Example 1, except that the particle size (D50) of the first positive electrode active material and the particle size (D50) of the second positive electrode active material were the same.

### Comparative Example 6

A positive electrode and an all-solid-state battery were manufactured in the same manner as Example 1, except that the particle size (D50) of the first positive electrode active material was greater than the particle size (D50) of the second positive electrode active material.

### Experimental Example 1: Performance Evaluation of All-Solid-State Battery

Performance evaluation of all-solid-state batteries was conducted according to the physical properties and composition of positive electrode active materials used in positive electrode manufacturing.

For performance evaluation of the all-solid-state battery, it was charged at a current rate of 0.1C until the voltage reached 4.25V (vs. Li/Li⁺), then charged while maintaining 4.25V (vs. Li/Li⁺) with a current cut-off of 0.05C. It was discharged at a current rate of 0.1C until the voltage reached 3V (vs. Li/Li⁺). This process was performed for 2 cycles, and the discharge capacity of the second cycle was utilized as the 0.1C initial capacity. Subsequently, it was charged at a current rate of 0.5C until 4.25V (vs. Li/Li⁺), then charged while maintaining 4.25V (vs. Li/Li⁺) with a current cut-off of 0.1C. It was discharged at a current rate of 0.5C until the voltage reached 3V (vs. Li/Li⁺). The capacity retention rate calculated by dividing the 0.5C discharge capacity obtained by repeating this evaluation process 200 times by the 0.5C initial discharge capacity was utilized as the capacity retention rate.

The electrode density was measured by pressing a mixed powder containing positive electrode active material, solid electrolyte, conductive material, and binder under pressure corresponding to battery manufacturing conditions, and this value was multiplied by the initial capacity to be utilized as electrode energy density.

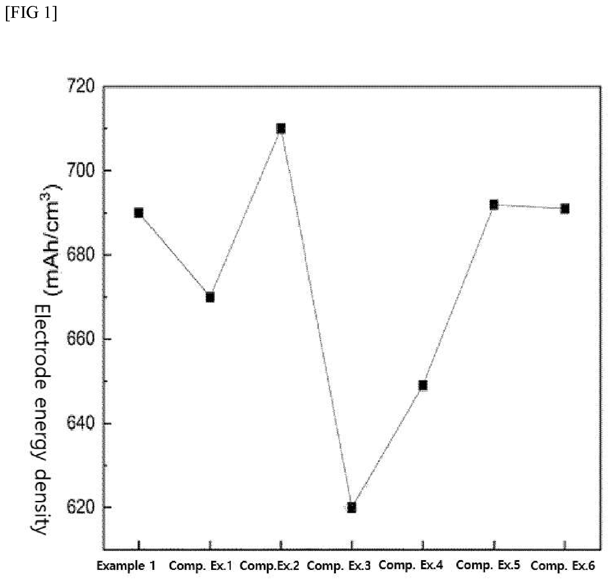

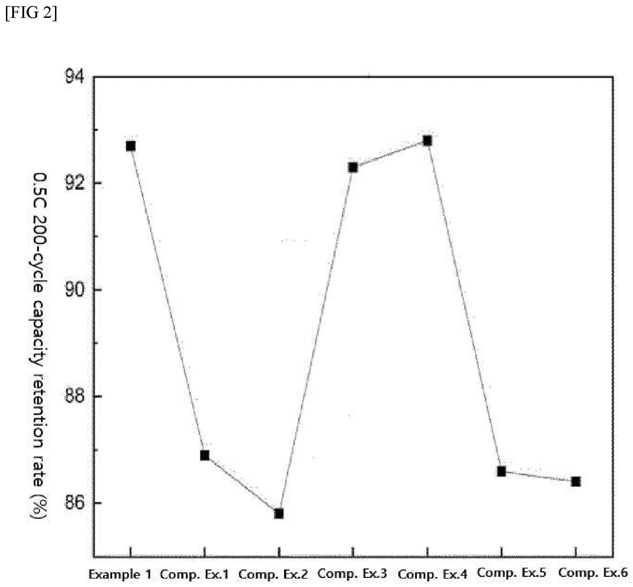

Table 2 below shows the evaluation results of initial capacity, electrode density, electrode energy density, and 0.5C 200-cycle capacity retention rate characteristics. FIG. 1 is a graph showing changes in energy density of positive electrodes manufactured in Example 1 and Comparative Examples 1 to 6. FIG. 2 is a graph showing changes in 200-cycle capacity retention rate of all-solid-state batteries manufactured in Example 1 and Comparative Examples 1 to 6.

**[Table 2]**

| | 0.1C Initial Capacity (mAh/g) | Electrode Density (g/cm³) | Electrode Energy Density (mAh/cm³) | 0.5C 200-cycle Capacity Retention Rate | Physical Property Evaluation Results |
|---|---|---|---|---|---|
| Example 1 | 219 | 3.15 | 690 | 92.7 | Excellent energy density and life |
| Comp. Ex. 1 | 224 | 2.99 | 670 | 86.9 | Inferior life |
| Comp. Ex. 2 | 226 | 3.14 | 710 | 85.8 | Inferior life |
| Comp. Ex. 3 | 206 | 3.01 | 620 | 92.3 | Inferior energy density |
| Comp. Ex. 4 | 208 | 3.12 | 649 | 92.8 | Inferior energy density |
| Comp. Ex. 5 | 221 | 3.13 | 692 | 86.6 | Inferior life |
| Comp. Ex. 6 | 220 | 3.14 | 691 | 86.4 | Inferior life |

Referring to Table 2, FIG. 1 and FIG. 2 above, Example 1 uses two types of positive electrode active materials, where the nickel content of the first positive electrode active material is greater than that of the second positive electrode active material, and the particle size (D50) of the first positive electrode active material is smaller than that of the second positive electrode active material, showing excellent energy density and life.

Also, Comparative Examples 1 to 4, which used one type of positive electrode active material, showed inferior life or inferior energy density.

Also, Comparative Example 5 used two types of positive electrode active materials like Example 1, but with the nickel content of the first positive electrode active material greater than that of the second positive electrode active material and the particle size (D50) of the first positive electrode active material equal to that of the second positive electrode active material, showing inferior life.

Also, Comparative Example 6 used two types of positive electrode active materials like Example 1, but with the nickel content of the first positive electrode active material greater than that of the second positive electrode active material and the particle size (D50) of the first positive electrode active material greater than that of the second positive electrode active material, showing inferior life.

Although preferred embodiments of the present disclosure have been described in detail above, the scope of rights of the present disclosure is not limited thereto, and various modifications and improvements by those skilled in the art using the basic concepts of the present disclosure defined in the following claims also belong to the scope of rights of the present disclosure.

## Claims

1. A positive electrode for an all-solid-state battery comprising a positive electrode current collector and a positive electrode active material layer formed on one surface of the positive electrode current collector,
wherein the positive electrode active material layer comprises a positive electrode active material, a solid electrolyte, a binder, and a conductive material,
the positive electrode active material comprises a first positive electrode active material and a second positive electrode active material,
a nickel content of the first positive electrode active material is greater than a nickel content of the second positive electrode active material,
and a particle size (D50) of the first positive electrode active material is smaller than a particle size (D50) of the second positive electrode active material.

2. The positive electrode for an all-solid-state battery according to claim 1,
wherein a molar fraction of nickel in the positive electrode active material is 0.6 to 0.99, and the molar fraction of nickel is a number of moles of nickel relative to a total number of moles of all metals excluding lithium among metals comprised in the positive electrode active material.

3. The positive electrode for an all-solid-state battery according to claim 2,
wherein the metals excluding lithium comprise nickel, cobalt, and manganese.

4. The positive electrode for an all-solid-state battery according to claim 1,
wherein a weight ratio of the first positive electrode active material and the second positive electrode active material is 1:1 to 5:1.

5. The positive electrode for an all-solid-state battery according to claim 1,
wherein a particle size (D50) of the positive electrode active material is 2 µm to 10 µm.

6. The positive electrode for an all-solid-state battery according to claim 1,
wherein the positive electrode active material has a layered structure.

7. The positive electrode for an all-solid-state battery according to claim 1,
wherein the positive electrode active material is comprised in an amount of 70 wt% to 95 wt% based on a total weight of the positive electrode active material layer.

8. The positive electrode for an all-solid-state battery according to claim 1,
wherein the solid electrolyte comprises at least one selected from the group consisting of a sulfide-based solid electrolyte and a chloride-based solid electrolyte.

9. The positive electrode for an all-solid-state battery according to claim 1,
wherein a particle size (D50) of the solid electrolyte is 2 µm or less.

10. The positive electrode for an all-solid-state battery according to claim 1,
wherein a porosity of the positive electrode active material layer is 5 vol% to 16 vol%.

11. An all-solid-state battery comprising the positive electrode according to any one of claims 1 to 10, a negative electrode, and a sulfide-based solid electrolyte membrane interposed therebetween.
